(19) Europäisches Patentamt

European Patent Office

Office européen des brevets

(11) EP 0 533 062 B1

# (12) EUROPEAN PATENT SPECIFICATION

(45) Date of publication and mention
of the grant of the patent:
**24.07.1996 Bulletin 1996/30**

(51) Int Cl.⁶: **H01Q 1/24**, G01S 13/75

(21) Application number: **92115540.4**

(22) Date of filing: **11.09.1992**

(54) **Antenna for transceiver devices or the like**

Antenne für Sende- und Empfangsgeräte oder für ähnliche Vorrichtungen

Antenne pour des dispositifs émetteurs-récepteurs ou similaires

(84) Designated Contracting States:
**AT BE CH DE DK ES FR GB GR IE IT LI LU MC NL PT SE**

(30) Priority: **18.09.1991 IT GE910114**

(43) Date of publication of application:
**24.03.1993 Bulletin 1993/12**

(73) Proprietor: **MARCONI S.p.A.**
**I-16153 Genova-Cornigliano (IT)**

(72) Inventors:
• **Oddo, Mario**
**I-17100 Savona (IT)**
• **Zanchet, Silvio**
**I-17028 Spotorno (IT)**

• **Frattoni, Alessandro**
**I-16038 S. Margherita (IT)**

(74) Representative: **Porsia, Dino, Dr. et al**
**c/o Succ. Ing. Fischetti & Weber**
**Via Caffaro 3/2**
**16124 Genova (IT)**

(56) References cited:
**EP-A- 0 412 884**          **DE-A- 4 017 625**
**GB-A- 2 223 130**

• **MICROWAVE JOURNAL, vol. 34, no. 1, January 1991, pages 115-126, Norwood, MA, US; J.A. NAVARRO et al.: "Active integrated antenna elements"**

## Description

The invention relates to an antenna for transceiver devices or the like, having a radiating structure which is provided in combination with a single detector/mixer diode; - the radiating structure being formed by a waveguide with a so-called microstrip structure having a resonating/radiating conductor formed by a conductor plate of quadrilateral, preferably rectangular, shape which coincides with the middle zone of an earth conductor plate, a so-called earth plane, from which it is separated by a layer of dielectric material, preferably by a plate of solid dielectric material;

- the detector/mixer diode connecting said resonating/radiating conductor with the earth conductor;
- the resonating/radiating conductor being connected at a predetermined point to an input/output conductor for the received signals and the transmitted signals.

Document GB-A-2 223 130 (see Fig.3) discloses an antenna of the above mentioned kind, being formed by a patch antenna connected to a local oscillator. The patch and the earth plate of the antenna are connected toghether by a mixer diode. The point of connection of the mixer diode to the patch is located off-centre of a patch diagonal, in one corner. The radiative signals received by the antenna and the local oscillator signals fed to it excite resonances with non zero amplitudes at the mixer connection point. The radiative and the local oscillator signals are therefore combined on the antenna patch for subsequent mixing. The mixer diode developes intermediate frequency signals which are extracted from the antenna patch through a coaxial lead having an internal conductor and an outer shield. The internal conductor is bonded to the centre of the antenna patch, while the shield is connected to the earth plane of the antenna. The intermediate frequency signal must then be further processed for extracting the information signals carried by the received waves.

Document EP-A-0 412 884 relates to a system for data transmission between an active central station ad at least one passive local station. The passive local station are able to receive and demodulate a modulated carrier wave transmitted from the central station and to locally modulate and to reflect back an unmodulated carrier wave transmitted to it by the central station using the same antenna for alternatively transmitting and receiving. Also this antenna shows a microstrip radiating structure. For extracting the received information signals and charging the information signals to be transmitted the antenna must be provided in combination with modulators and demodulators units.

Document DE-A-40 17 625 discloses a microwave transponder having an antenna which is formed by two microstripe-conductors being complanar and longitudinally aligned and which are spaced apart one of the other with their facing ends. This two facing ends of the two conductors are connected together by a diode. By commuting the diode in an on and off state of conduction the antenna radiating structure is alternatively able to getting in resonance or not with the carrier wave. This allows to perform modulation and demodulation of the carrier wave without providing modulation or demodualtion units. In order to adjust and dimensionate the antenna in the way as to obtain maximum efficency, the microstrip-conductors' length, their distance and the position of the diode can be suitably adjusted.

In the transceiver devices, extraction, from the modulated carrier wave received, of the modulation signals containing logic information, and superimposition, on the carrier wave transmitted, of the logic information contained in local modulation signals are generally performed by means of demodulators and modulators. Modulators and demodulators are also used in so-called "transponders", i.e. receiving/reflecting devices which, instead of generating their own transmission carrier wave, use for transmission the carrier wave, preferably unmodulated, which they receive from a remote transmitting station and which is modulated by them and then reflected back. These devices possess the advantage that they do not require local oscillators and the corresponding power circuits for generation of the carrier wave. On account of their small dimensions, they are used extensively in telecommunications and in control and remote identification systems where they are combined with local control devices or with the identification units. The frequency ranges used may be of any kind and in particular are within the microwave range. Owing to the growing automation and robotisation of industrial processes and plants of all kinds, there is a tendancy towards' increasingly widespread use of such systems. This has given rise to the need to improve the transceiver/reflecting devices and reduce their costs and dimensions as far as possible, with the development of special technologies in the microwave range.

The object of the invention, therefore, is to provide an antenna for transceiver devices or the like, in particular for receiving/reflecting devices, which results in a simple, inexpensive and extremely compact design of such devices, all of which without adversely affecting, but on the contrary actually improving their operation and performance.

The invention achieves the above objects with an antenna for transceiver devices or the like, as claimed in Claim 1.

The antenna is able to receive a carrier wave, preferably unmodulated, and modulate the said wave with local modulation signals, reflecting it back.

Demodulation of the signals received and modulation with the local transmission signals is therefore performed without having to use separate demodulators and modulators, together with the corresponding filters, local oscillators and the usual circuitry associated with them. In addition to the reduction in the number of components and the extremely simple design, a considerable reduction in the dimensions is also achieved. The point chosen for detection and supplying of the modulation signals received and transmitted ensures that the carrier is confined entirely in the resonating/radiating conductor, and the point of insertion chosen for the detector/mixer diode on the resonating/radiating conductor forms the optimum connection between diode and conductor. This results in optimisation of both the level of the demodulated signals received and the efficiency of reflection of the locally modulated carrier.

The invention also relates to other features which further improve the abovementioned antenna and which are described in the subclaims.

The characteristic details of the invention and the advantages resulting therefrom will emerge more clearly from the description of a preferred embodiment, illustrated by way of a non-limiting example in the accompanying drawings, in which:

Figure 1 shows a perspective view of the side of the antenna constructed in microstrip technology, where the so-called patch is located;

Figure 2 shows a cross-section through the antenna of Figure 1 in the area of the detector/mixer diode and along the line II-II of Figure 3.

Figure 3 shows a plan view of the side of the antenna according to the preceding figures, where the so-called reference earth plane is located.

In the example shown in the Figures, the antenna according to the invention is constructed in so-called microstrip technology, already used for the construction of waveguides for propagating signals in the microwave briefly "antenna" below, consists of two conductors separated by a solid dielectric element. The said structure comprises a rectangular plate 2 of dielectric material, on each face of which a thin conducting plate 3, 4 is fixed. One of the two conducting plates 4, called an "earth plane", covers the entire surface of the dielectric plate 2. The other conducting plate 3, the so-called "patch", is arranged in the centre of the opposite face of the dielectric plate 2 and has a rectangular shape with dimensions significantly smaller than those of the earth plane 4. The so-called patch 3 forms the resonating/radiating conductor, while the earth plane 4 performs the function of an artificial earth. From a supply and detection point P of the patch 3, namely in this case the central point of one of its shortest sides 103, there extends an input/output conductor 5 to which the remainder of the circuit of a transceiver device (not shown), for example a transponder, is connected.

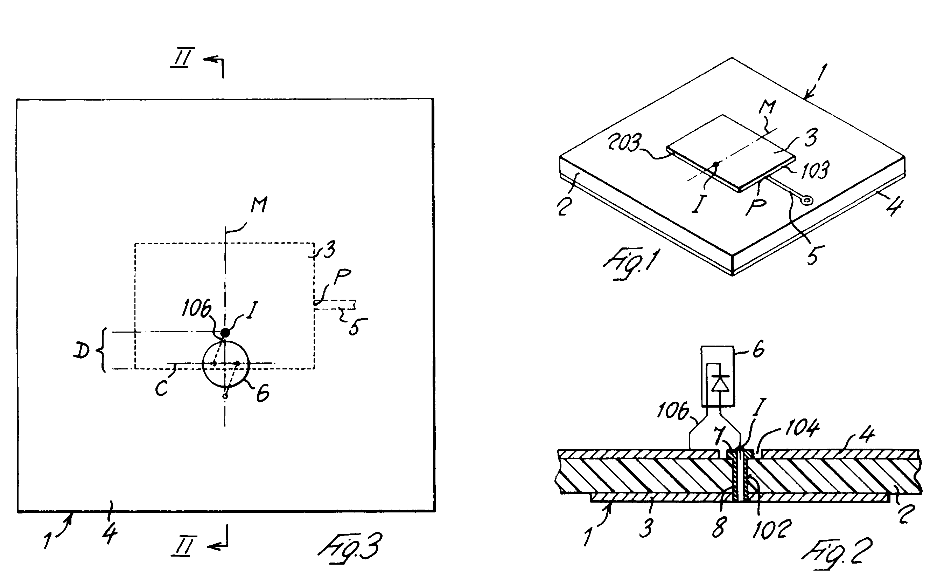

A diode 6 connects the patch 3 to the earth plane 4. The point of connection of the diode 6 to the patch 3, the so-called insertion point I, coincides with the median axis M parallel to the shortest side 103 of the patch 3, while it is arranged at a given distance D from one of the longitudinal sides 203 of the patch 3 perpendicular to the said median axis M. The diode 6 is arranged in the direction of conduction from the patch 3 to the earth plane 4 (Figure 2) and is fixed to the antenna 1 on the side where the earth plane 4 is located. In particular (Figure 2), in the region of the insertion point I, the earth plane 4 has a through-aperture 104, inside which an extension 7 of the patch 3 forming a connection to the detector/mixer diode 6 is accommodated so as to be electrically insulated from the earth plane 4 itself. The connection extension 7, on the side where the earth plane 4 is located, is connected electrically to the patch 3 by means of a tubular conducting bush 8 which passes from one side to the other of the dielectric plate 2 through a hole 102 coinciding with the insertion point I itself.

The insertion point I of the detector/mixer diode 6 is determined so as to obtain the optimum impedance matching of the antenna 1 with the detector/mixer diode 6. Determination of the insertion point I is not easy, since the detector/mixer diode 6 acts alternately as a loading device for the antenna 1 and generator, during reception and transmission. Matching of the impedance of the antenna 1 at the insertion point I with the impedance of the detector/mixer diode 6 must be performed taking this into account, in order to optimise simultaneously the efficiency during reception and that during transmission/reflection.

For this purpose, the insertion point I may be determined experimentally or theoretically. In the latter case, the insertion point I is calculated to a good and adequate degree of approximation, as is the point of the patch 3, the input impedance of which assumes a predetermined value matching the impedance of the detector/mixer diode 6, in particular for example of the order of magnitude of the impedance of the detector/mixer diode 6 or approximately identical to the impedance of the same at the resonant frequency $w_{10}$ of the radiating antenna structure (1). Obviously the radiating structure (1) is constructed such that the resonant frequency $w_{10}$ coincides substantially with the frequency of the carrier wave.

With reference to the present example in which the insertion point I is arranged on the median axis M of the patch 3 parallel to the side 103 on which the detection and supply point P is provided, the distance D of the insertion point I from one of the sides 203 of the patch 3 transverse relative to the said median axis M is defined by the relation with the input ipedance $Z_{in}$ of the radiating structure 1 at the insertion point I at the resonant frequency $w_{10}$:

$$Z_{in} = Z_{in} (L, W, D, h, K_o, Z_o, \varepsilon\tau, Q_T, W_{10})$$

where:

| | |
|---|---|
| L: | length of the side 203 of the patch 3 |
| W: | length of the side 103 of the patch 3 |
| D: | distance of the insertion point I from the side 203 of the patch 3 |
| h: | distance of the patch 3 from the earth plane 4 |
| $K_o$: | $2\pi/\lambda_o$ with $\lambda_o$: wavelength in air |

$Z_o$ : characteristic impedance of vacuum

$\varepsilon\tau$ : dielectric constant

$Q_T$: merit factor of the antenna (calculable)

$w_{10}$: resonant frequency.

The point P for detecting and supplying the demodulated signals received and the local modulation signals is determined so as to coincide with the point of the patch 3-where the electric field generated by the carrier wave is equal to zero.

During reception of a modulated carrier wave, the diode 6 acts as detector, extracting from the modulated carrier the modulation signals and hence the information transmitted therein. Owing to the particular arrangement of the insertion point I, the level of the demodulated signals is optimised. As a result of the positioning of the detection and supply point P, automatic filtering of all the components of the carrier wave confined in the patch 3 can be achieved. Only the baseband signals relating to the information transmitted are output from the patch 3, thus avoiding the need for both a conventional envelope demodulator and the filters associated therewith.

During reflection, the diode 6 acts as a modulator of the carrier wave which during this phase is transmitted preferably unmodulated and which is confined in the patch 3. The local modulation signals are sent to the antenna 1 at the detection and supply point P. Modulation can be performed without the use of local oscillators and the usual additional circuits associated therewith. The arrangement of the point P for detecting and supplying the modulated signals received and transmitted, and of the insertion point I of the diode 6 prevent diffusion of the carrier wave beyond the detection and supply point P towards the internal circuits and thus result in optimum efficiency of reflection of the carrier wave itself, modulated with the local modulation signals.

The efficiency of the antenna according to the invention both during reception and transmission/reflection is also influenced by additional parameters which depend in each case on the operating conditions, such as type of modulation, structure of the analog or digital signals, wavelength of the carrier and frequency of the modulation signals, and type of polarisation. All of this influences the dimensions of the antenna, the choice of diode, the polarisation current of the diode, where present, and the orientation of the antenna and/or the diode itself.

In the case, for example, of a system with at least one transmitting/receiving station and a transponder, in which a carrier wave of between 5.72 and 5.8 GHz is used to send information to the transponder, it is appropriate to modulate the amplitude of the carrier, whereas, in order to send data from the transponder to the station, the carrier is frequency-modulated. When the data received and transmitted are of the digital type it is preferable to use ASK amplitude modulation during reception and frequency modulation of the carrier during transmission/reflection, as in the case where the carrier is mixed with a medium frequency signal obtained from frequency modulation, for example FEK modulation.

By varying the polarisation current of the detector/mixer diode 6, it is possible to modify and correct the waveform and the amplitude of the modulating signals, in particular during reception.

In this case, the dimensions of the antenna, in particular the patch 3, are extremely small, namely of the order of ten millimentres or so for the side 103 and 203, while the distance D of the insertion point from the side 203 of the patch 3 is a few millimetres. Further-more, in view of the extremely small dimensions of the patch 3, the tolerances for determining the insertion point I are relatively large, the extension of the pins 106 of the detector/mixer diode 6 not being insignificant compared to the surface area of the patch 3. In this case, for most of the commercially available diodes 6 with characteristics suitable for the purpose, it has been shown that the impedance matching between radiating antenna structure 1 and diode 6 is almost always ensured, within the context of the operational requirements of the antenna, when the impedance of the radiating structure 1, or the patch 3, at the insertion point is between 10 and 100 ohms, in particular from 40 to 50 ohms.

With special plane polarisation of the carrier wave, the efficiency of the antenna both during reception and reflection is optimum when, as shown in Figure 3, the diode 6 is oriented with the axis C which joins the two pins 106, parallel to the side 203 of the patch 3, the said side 203 of the patch 3 and the said axis C being oriented at an angle of 90° with respect to the plane containing the electric field of the carrier wave.

Obviously, the invention is not limited to the embodiments described and illustrated herein, but may also be substantially varied and modified, in particular from a constructional point of view. The antenna/diode structure of the present invention may be used with any type of radiating antenna structure for any type of use, all of which without departing from the underlying principle described above and claimed below.

## Claims

1. Antenna for transceivers devices or the like, having a radiating structure (1) which is provided in combination with a single detector/mixer diode (6),

   - the radiating structure (1) being formed by a waveguide with a so-called microstrip structure (1) having a resonating/radiating conductor (3) formed by a conductor plate of quadrilateral, preferably rectangular, shape which coincides with the middle zone of an earth conductor plate (4), a so-called earth plane, from which it is separated by a layer of dielectric material (2), preferably by a plate of solid dielectric material;

     the detector/mixer diode (6) connecting said resonating/radiating conductor (3) with the earth conductor (4);

- the resonating/radiating conductor (3) being connected at a predetermined point (P) to an input/output conductor (5) for the received signals and the transmitted signals, characterized in that

- the detector/mixer diode (6) is connected to the resonating/radiating conductor (3) and to the earth conductor (4), being oriented in the direction of conduction from the resonating/radiating conductor (3) to the earth conductor (4);

- the detector/mixer diode (6) being connected to the resonating/radiating conductor (3) at such a point (I) of the said conductor (3) (insertion point) as to obtain optimum impedance matching between the characteristic impedance of the radiating structure (1), or of the resonating/radiating conductor (3), with reference to the said insertion point (I), and the impedance of the detector/mixer diode (6);

- the detector/mixer diode (6) being arranged on one side of the antenna structure (1) outside said structure (1) and having a predetermined orientation with respect to the antenna structure, depending on the fact whether the carrier wave is polarised and on the predetermined direction of polarisation of the carrier wave;

- the conductor (5) for detecting and supplying respectively the received signals and the transmitted signals being connected at a point (P) of the resonating/radiating conductor (3) at which the electric field of the carrier wave is equal to zero;

- so as to form an integrated device for receiving modulated carrier waves and demodulating at the same time from said modulated carrier wave the modulation signals received and for modulating with locally generated modulation signals a locally generated carrier wave and transmitting said modulated carrier wave or modulate with said locally generated modulation signals an unmodulated carrier wave received and reflecting it back, the demodulated modulation signals received and the modulation signals transmitted being respectively directly detected at and directly supplied to the point (P) of the resonating/radiating conductor (3) without processing the signals in further modulation or demodulation units.

2. Antenna according to Claim 1, characterized in that the resonating/radiating conductor (3) has a resonant frequency corresponding to the frequency of the carrier wave used, the insertion point (I) of the detector mixer diode (6) on the said resonating/radiating conductor (3) coinciding with the point of the resonating/radiating conductor (3) where the cha-

racteristic impedance is of the order of magnitude of or substantially identical to the impedance of the detector/mixer diode (6) at the resonant frequency $w_{10}$ corresponding to the frequency of the carrier wave.

3. Antenna according to one or more of the preceding claims, characterised in that the detector/mixer diode (6) may have applied to it a polarisation current which constitutes a parameter for adjusting and correcting the waveform and amplitude, in particular of the modulation signals received.

4. Antenna according to one or more of the preceding claims, characterised in that the point (P) for detecting and supplying the modulating signals, during reception and transmission, coincides with the middle point of one of the lateral edges (103) of the resonating/radiating conductor (3).

5. Antenna according to Claim 4, characterised in that the insertion point (I) of the detector/mixer diode (6) is provided so as to coincide with the median axis (M) parallel to the side (103) of the resonating/radiating conductor (3) on which the detection and supply point (9) is provided, and at a predetermined distance (D) from one of the sides (203) of the resonating/radiating conductor transverse relative to the said median axis (M), which distance is determined experimentally and/or theoretically so as to ensure optimum impedance matching of the resonating/radiating conductor (3) at the insertion point (I) with the impedance of the detector/mixer diode (6) at the carrier wave frequency.

6. Antenna according to Claim 5, characterised in that the distance (D) of the insertion point (I) on the median axis (M), from the side of the resonating/radiating conductor (3) is determined by the relation with the input impedance $Z_{in}$ of the resonating/radiating conductor (3) at the insertion point (I) at the said carrier wave frequency $w_{10}$, defined by the following equation:

$$Z_{in} = Z_{in} \, (L, W, D, h, K_o, Z_o, \varepsilon\tau, Q_T, W_{10})$$

where:

L, W: dimensions of the sides (103, 203) of the resonating/radiating conductor (3)

D : distance of the insertion point (I) from the side (203) of the resonating/radiating conductor (3) transverse relative to the median axis (M)

h : thickness of the dielectric element (2)

$K_o$ : $2\pi/\lambda_o$ with $\lambda_o$: wavelength in air

$Z_o$ : characteristic impedance of vacuum

$\varepsilon\tau$: dielectric constant

$Q_T$: merit factor of the antenna (calculable)

$w_{10}$: resonant frequency,

while the input impedance $Z_{in}$ corresponds to an empirical or experimental value aimed at optimising the impedance matching between detector/mixer diode (6) and resonating/radiating conductor (3), during reception and transmission/reflection, in particular of the order of magnitude of or even identical to the impedance of the detector/mixer diode (6).

7. Antenna according to one or more of Claims 4 to 6, characterised in that the detector/mixer diode (6) is connected to the radiating antenna structure (1), on the side where the earth conductor plate (4) is located, an extension (7) being provided on the said side for connecting the resonating/radiating conductor (3) to the detector/mixer diode (6) which coincides with the zone of the insertion point (I) and is insulated electrically from the earth conductor plate (4), while the said connection extension (7) is connected electrically to the opposite resonating/radiating conductor (3) by means of a tubular conducting bush (8) coaxial with the insertion point (I) and passing through from one side to the other of the dielectric plate (2).

8. Antenna according to one or more of the preceding claims, characterised in that, in the case of polarised carrier waves, the detector/mixer diode (6) is oriented, with the axis (C) connecting the two pins (106), in a predetermined manner with respect to the sides of the resonating/radiating conductor (3) and, in particular, in the case of plane polarised waves, the said axis (C) is oriented parallel to the side (203) of the resonating/radiating conductor (3) which is transverse relative to the median axis (M) coinciding with the insertion point (I), the said side (203) being oriented at angle of 90° with respect to the plane of polarisation of the electric field of the carrier wave.

9. Antenna according to one or more of the preceding claims, characterised in that the detector/mixer diode (6) constitutes a demodulator preferably of amplitude-modulated carrier waves received and a frequency modulator of the carrier waves transmitted/reflected, preferably a mixer of the carrier wave transmitted/reflected with a frequency-modulated medium frequency signal.

10. Antenna according to one or more of the preceding claims, characterised in that in the range of microwaves, in particular of the order of magnitude of 1A to 20 GHz, preferably 5 to 10 GHz, the distance (D) of the insertion point (I) is determined in correspondance with a matched input impedance $Z_{in}$ of the resonating/radiating conductor (3) at the insertion point (I) from 10 to 100 ohms, in particular from 40 to 50 ohms.

11. Antenna according to Claim 10, characterised in that, for a carrier wave at 5.76 GHz, the dimensions of the resonating/radiating conductor (3) are of the order of ten millimetres or so for the sides (203) oriented transversely relative to the median axis (M) and for the sides (103) parallel to the said median axis (M), whereas the distance (D) of the insertion point (I) from one of the said transverse sides is of the order of a few millimetres.

**Patentansprüche**

1. Antenne für Sende- und Empfangsgeräte oder ähnliche Vorrichtungen, aufweisend eine abstrahlende Struktur 1, die in Kombination mit einer einzelnen Empfänger-/ Mischer-Diode (6) ausgestattet ist,

   - die abstrahlende Struktur (1) durch einen Wellenleiter mit einer sogenannten Mikrostreifen-Struktur (1) gebildet ist, aufweisend einen mitschwingenden/ abstrahlenden Leiter (3) gebildet durch eine leitfähige Platte von vierseitiger, vorzugsweise rechteckiger Form, die mit dem Mittelbereich einer geerdeten, leitfähigen Platte (4), einer sogenannten Masseebene, zusammenfällt, durch die sie durch eine Schicht von dielektrischem Material (2), vorzugsweise durch eine Platte von festem dielektrischem Material, getrennt ist;

   - die Empfänger-/ Mischer-Diode (6) verbindend den mitschwingenden/ abstrahlenden Leiter (3) mit dem Erdleiter (4);

   - der mitschwingende/ abstrahlende Leiter (3) an einem vorherbestimmten Punkt P mit einem Eingabe-/ Ausgabeleiter (5) für die empfangenen Signale und die gesendeten Signale verbunden ist,

   **dadurch gekennzeichnet, daß**

   - die Empfänger-/ Mischer-Diode (6) mit dem mitschwingenden/ abstrahlenden Leiter (3) und dem Erdleiter (4) verbunden ist, ausgerichtet in Flußrichtung von dem mitschwingenden/ abstrahlenden Leiter (3) zu dem Erdleiter (4);

   - die Empfänger-/ Mischer-Diode (6) mit dem mitschwingenden/ abstrahlenden Leiter (3) an einem solchen Punkt I (Einfügungspunkt) des besagten Leiters (3) verbunden ist, an dem eine optimale Anpassung der Impedanz zwischen der charakteristischen Impedanz der abstrahlenden Struktur (1) oder des mitschwingenden/ abstrahlenden Leiters (3), in Abhängigkeit von dem besagten Einfügungspunkt I, und der Impedanz der Empfänger-/ Mischer-Diode (6) erzielbar ist;

- die Empfänger-/ Mischer-Diode (6) auf einer Seite der Antennenstruktur (1) außerhalb der besagten Struktur (1) angeordnet ist und eine vorherbestimmte Orientierung in Abhängigkeit von der Antennenstruktur aufweist, die davon abhängt, ob die Trägerwelle polarisiert ist und von der vorherbestimmten Richtung der Polarisation der Trägerwelle;

- der Leiter (5) zum Empfang und Versorgen insbesondere der empfangenen Signale und der übertragenen Signale an einem Punkt P mit dem mitschwingenden/ abstrahlenden Leiter (3) verbunden ist, an dem das elektrische Feld der Trägerwelle gleich Null ist;

- zur Bildung eines integrierten Gerätes zum Empfangen von modulierten Trägerwellen und zum gleichzeitigen Demodulieren der empfangenen modulierten Signale von der besagten modulierten Trägerwelle und zum Modulieren einer lokal generierten Trägerwelle mit lokal generierten Modulationssignalen und zum Übertragen der besagten modulierten Trägerwelle oder zum Modulieren einer unmodulierten, empfangenen Trägerwelle mit den besagten lokal generierten Modulationssignalen und zum Rückreflektieren sind die demodulierten empfangenen Modulationssignale und die übertragenen Modulationssignale insbesondere direkt empfangbar an und direkt zuführbar zu dem Punkt (P) des mitschwingenden/ abstrahlenden Leiters (3) ohne Bearbeitung der Signale in weiteren Modulations- oder Demodulations-Einheiten.

2. Antenne gemäß Anspruch 1, **dadurch gekennzeichnet**, daß der mitschwingende/ abstrahlende Leiter (3) eine Resonanzfrequenz korrespondierend zu der Frequenz der benutzten Trägerwelle aufweist, der Einfügungspunkt (I) der Empfänger-/ Mischer-Diode (6) auf dem besagten mitschwingenden/ abstrahlenden Leiter (3) mit dem Punkt des mitschwingenden/ abstrahlenden Leiters (3) zusammenfällt, an dem die charakteristische Impedanz in der Größenordnung oder im wesentlichen identisch mit der Impedanz der Empfänger-/ Mischer-Diode (6) bei der Resonanzfrequenz $w_{10}$ entsprechend der Frequenz der Trägerwelle ist.

3. Antenne gemäß einem oder mehreren der vorstehend genannten Ansprüche, **dadurch gekennzeichnet**, daß die Empfänger-/ Mischer-Diode (6) mit einem Polarisationsstrom beaufschlagt ist, der einen Parameter zur Einstellung und Korrektur der Wellenform und der Amplitude, insbesondere der Modulation der empfangenen Signale bildet.

4. Antenne gemäß einem oder mehreren der vorstehenden Ansprüche, **dadurch gekennzeichnet**, daß der Punkt (P) zum Empfangen und Aufgeben der Modulationssignale während des Empfangs und der Übertragung mit dem Mittelpunkt von einer der seitlichen Kanten (103) des mitschwingenden/ abstrahlenden Leiters (3) zusammenfällt.

5. Antenne gemäß Anspruch 4, **dadurch gekennzeichnet**, daß der Einfügungspunkt (I) der Empfänger-/ Mischer-Diode (6) derart gewählt ist, daß er mit der Mittelachse (M) parallel zu der Seite (103) des mitschwingenden/ abstrahlenden Leiters (3) zusammenfällt, auf dem der Empfänger- und Einspeisepunkt (9) vorgesehen ist, und in einem vorher bestimmten Abstand (D) von einer der Seiten (203) des mitschwingenden/ abstrahlenden Leiters quer relativ zur besagten Mittelachse (M), wobei der Abstand experimentell und/ oder theoretisch derart bestimmbar ist, daß eine optimale Anpassung der Impedanz des mitschwingenden/ abstrahlenden Leiters (3) an dem Einfügungspunkt (I) mit der Impedanz der Empfänger-/ Mischer-Diode (6) bei der Frequenz der Trägerwelle sichergestellt ist.

6. Antenne gemäß Anspruch 5, **dadurch gekennzeichnet**, daß der Abstand (D) des Einfügungspunktes auf der Mittelachse (M) von der Seite des mitschwingenden/ abstrahlenden Leiters (3) durch das Verhältnis zwischen der Eingangsimpedanz $Z_{in}$ des mitschwingenden/ abstrahlenden Leiters (3) an dem Einfügungspunkt (I) bei der besagten Trägerfrequenz $w_{10}$ bestimmt ist, definiert durch die folgende Gleichung:

$$Z_{in} = Z_{in} (L, W, D, h, K_o, Z_o, \varepsilon_r, Q_T, W_{10}),$$

wobei

L, W: Abmessungen der Seiten (103, 203) des mitschwingenden/strahlenden Leiters (3)

D: Abstand des Einfügungspunktes I von der Seite (203) des mitschwingenden/ abstrahlenden Leiters (3) quer relativ zur Mittelachse M

h: Dicke des dielektrischen Elementes (2)

$K_o$: $2\pi/\lambda_o$ mit $\lambda_o$: Wellenlänge in Luft

$Z_o$: charakteristische Impedanz im Vakuum

$\varepsilon_r$: Dielektrizitätskonstante

$Q_T$: Übertragungsfaktor der Antenne (bere-

chenbar)

$w_{10}$: Resonanzfrequenz,

wobei die Eingangsimpedanz $Z_{in}$ einem empirischen oder experimentellen Wert entspricht bei der optimalen Einstellung der Impedanz zwischen der Empfänger-/ Mischer-Diode (6) und dem mitschwingenden/ abstrahlenden Leiter (3) während des Empfangens und des Übertragens/ Reflektierens entspricht insbesondere in der Größenordnung oder nahezu identisch mit der Impedanz der Empfänger-/ Mischer-Diode (6).

7. Antenne gemäß einem oder mehreren der Ansprüche 4 bis 6, **dadurch gekennzeichnet**, daß die Empfänger-/ Mischer-Diode (6) mit der abstrahlenden Antennenstruktur (1) auf der Seite verbunden ist, an der die geerdete leitfähige Platte (4) angeordnet ist, ein Vorsprung (7) auf der besagten Seite zur Verbindung des mitschwingenden/ abstrahlenden Leiters (3) mit der Empfänger-/ Mischer-Diode (6) vorgesehen ist, der mit der Zone des Einfügungspunktes (I) zusammenfällt und elektrisch von der geerdeten leitfähigen Platte (4) isoliert ist, wobei der besagte Verbindungsvorsprung (7) elektrisch mit dem gegenüberliegenden mitschwingenden/ abstrahlenden Leiter (3) mittels einer röhrenförmigen, leitenden Buchse (8) koaxial mit dem Einfügungspunkt (I) verbunden ist, der die dielektrische Platte (2) von einer Seite zu der anderen durchtritt.

8. Antenne gemäß einem oder mehreren der vorstehenden Ansprüche, **dadurch gekennzeichnet**, daß im Falle von polarisierten Trägerwellen die Empfänger-/ Mischer-Diode (6) mit der Achse C in der Verbindungslinie der beiden Beine (106) in einer vorbestimmten Weise in Abhängigkeit von den Seiten des mitschwingenden/ abstrahlenden Leiters (3) orientiert ist und im speziellen im Falle von ebenen polarisierten Wellen die besagte Achse C parallel zu der Seite (203) des mitschwingenden/ abstrahlenden Leiters (3) orientiert ist, die relativ quer zur Mittelachse (M) zusammenfallend mit dem Einfügungspunkt (I) angeordnet ist, die besagte Seite (203) in einem Winkel von 90 Grad in Abhängigkeit von der Ebene der Polarisation des elektrischen Feldes der Trägerwelle angeordnet ist.

9. Antenne gemäß einem oder mehreren der vorstehenden Ansprüche, **dadurch gekennzeichnet**, daß die Empfänger-/ Mischer-Diode (6) einen Demodulator bildet, vorzugsweise für empfangene, amplituden- modulierte Trägerwellen und einen Frequenzmodulator für übertragene/ reflektierende Trägerwellen, vorzugsweise einen Mischer der übertragenen/ reflektierten Trägerwelle mit einem frequenzmodulierten, mittleren Frequenzsignal.

10. Antenne gemäß einem oder mehreren der vorstehenden Ansprüche, **dadurch gekennzeichnet**, daß in dem Bereich der Mikrowellen, insbesondere in der Größenordnung von 1A bis 20 GHz, vorzugsweise 5 bis 10 GHz, der Abstand (D) des Einfügungspunktes (I) in Abhängigkeit von einer eingestellten Eingangsimpedanz $Z_{in}$ des mitschwingenden/ abstrahlenden Leiters (3) an dem Einfügungspunkt (I) von 10 bis 100 Ohm, im speziellen von 40 bis 50 Ohm, festgelegt ist.

11. Antenne gemäß Anspruch 10, dadurch gekennzeichnet, daß für eine Trägerwelle von 5,76 GHz die Abmessungen des mitschwingenden/ abstrahlenden Leiters (3) in der Größenordnung von zehn Millimeter oder ähnlich für die Seiten (203) ist, die quer relativ zur Mittelachse (M) angeordnet sind, und für die Seiten (103) parallel zur besagten Mittelachse (M), wohingegen der Abstand (D) des Einfügungspunktes (I) von einer der besagten Querseiten in der Größenordnung von einigen wenigen Millimetern liegt.

## Revendications

1. Antenne pour dispositif émetteurs-récepteurs ou similaires, ayant une structure rayonnante (1) qui est établie en combinaison avec une seule diode détectrice/mélangeuse (6),

   - la structure rayonnante (1) étant formée par un guide d'ondes de structure dite micro-ruban (1), ayant un conducteur résonnant/rayonnant (3) formé par une plaque de conducteur ayant une forme de quadrilatère, de préférence rectangulaire, qui coïncide avec la zone médiane d'une plaque de conducteur de masse (4), c'est-à-dire ce que l'on appelle un plan de masse ou de sol, de laquelle elle est séparée par une couche de matériau diélectrique (2), de préférence par une plaque de matériau diélectrique à l'état solide;
     la diode détectrice/mélangeuse (6) connectant le conducteur résonnant/rayonnant (3) au conducteur de masse (4);
   - le conducteur résonnant/rayonnant (3) étant connecté en un point prédéterminé (P) à un conducteur d'entrée/sortie (5) pour les signaux reçus et les signaux émis, caractérisée en ce que
   - la diode détectrice/mélangeuse (6) est connectée au conducteur résonnant/rayonnant (3) et au conducteur de masse (4), en étant orienté dans la direction de conduction du conducteur résonnant/rayonnant (3) vers le conducteur de masse (4);
   - la diode détectrice/mélangeuse (6) étant connectée au conducteur résonnant/rayonnant (3) en un point (I) de ce conducteur (3) (point d'insertion) qui est tel que l'on obtienne une adaptation d'impédance optimale entre l'impédance caractéristique de la structure rayonnante (1), ou du conducteur résonnant/rayonnant (3), par rapport au point d'insertion (I), et l'impédance de la diode détectrice/mélangeuse (6);

- la diode détectrice/mélangeuse (6) étant disposée d'un côté de la structure d'antenne (1), à l'extérieur de cette structure (1), et ayant une orientation prédéterminée par rapport à la structure d'antenne, qui dépend du fait que l'onde porteuse est polarisée ou non, et de la direction de polarisation prédéterminée de l'onde porteuse;

- le conducteur (5) destiné à détecter et à fournir respectivement les signaux reçus et les signaux émis étant connecté à un point (P) du conducteur résonnant/rayonnant (3) auquel le champ électrique de l'onde porteuse est égal à zéro;

- de façon à former un dispositif intégré pour recevoir des ondes porteuses modulées et pour démoduler simultanément à partir de l'onde porteuse modulée les signaux de modulation qui sont reçus, et pour moduler avec des signaux de modulation générés de façon locale une onde porteuse générée de façon locale et pour émettre cette onde porteuse modulée, ou pour moduler avec les signaux de modulation générés de façon locale une onde porteuse non modulée qui est reçue et pour la réfléchir en retour, les signaux de modulation démodulés qui sont reçus et les signaux de modulation qui sont émis étant respectivement détectés directement au point (P) du conducteur résonnant/rayonnant (3) et appliqués directement à ce point, sans traitement des signaux dans des unités de modulation ou de démodulation supplémentaires.

2. Antenne selon la revendication 1, caractérisée en ce que le conducteur résonnant/rayonnant (3) a une fréquence de résonance correspondant à la fréquence de l'onde porteuse utilisée, le point d'intersection (I) de la diode détectrice/mélangeuse (6) sur le conducteur résonnant/rayonnant (3) coïncidant avec le point du conducteur résonnant/rayonnant (3) auquel l'impédance caractéristique est de l'ordre de grandeur de l'impédance de la diode détectrice/mélangeuse (6) à la fréquence de résonance $w_{10}$ qui correspond à la fréquence de l'onde porteuse, ou est pratiquement identique à cette impédance.

3. Antenne selon une ou plusieurs des revendications précédentes, caractérisée en ce que la diode détectrice/mélangeuse (6) peut recevoir un courant de polarisation qui constitue un paramètre pour le réglage et la correction de la forme d'onde et de l'amplitude, en particulier des signaux de modulation reçus.

4. Antenne selon une ou plusieurs des revendications précédentes, caractérisée en ce que le point (P) pour la détection et l'application des signaux de modulation, pendant la réception et l'émission, coïncide avec le plan médian de l'un des bords latéraux (103) du conducteur résonnant/rayonnant (3).

5. Antenne selon la revendication 4, caractérisée en ce que le point d'insertion (I) de la diode détectrice/mélangeuse (6) est établi de façon à coïncider avec l'axe médian (M) parallèle au côté (103) du conducteur résonnant/rayonnant (3) sur lequel se trouve le point de détection et d'application (9), et à une distance prédéterminée (D) de l'un des côtés (203) du conducteur résonnant/rayonnant qui est transversal par rapport à l'axe médian (M), cette distance étant déterminée de façon expérimentale et/ou théorique, de façon à garantir une adaptation d'impédance optimale du conducteur résonnant/rayonnant (3) au point d'insertion (I), avec l'impédance de la diode détectrice/mélangeuse (6) à la fréquence de l'onde porteuse.

6. Antenne selon la revendication 5, caractérisée en ce que la distance (D) du point d'insertion (I) sur l'axe médian (M), par rapport au côté du conducteur résonnant/rayonnant (3) est déterminée par la relation avec l'impédance d'entrée $Z_{in}$ du conducteur résonnant/rayonnant (3) au point d'insertion (I) à la fréquence de l'onde porteuse $w_{10}$, qui est définie par l'expression suivante :

$$Z_{in} = Z_{in} (L, W, D, h, K_o, Z_o, \varepsilon_\tau, Q_T, W_{10})$$

dans laquelle :

L, W : dimensions des côtés (103, 203) du conducteur résonnant/rayonnant (3)

D : Distance du point d'insertion (I) par rapport au côté (203) du conducteur résonnant/rayonnant (3) qui est orienté transversalement par rapport à l'axe médian (M)

h : Epaisseur de l'élément diélectrique (2)

$K_o$ : $2\pi/\lambda_o$ avec $\lambda_o$ : longueur d'onde dans l'air

$Z_o$ : impédance caractéristique du vide

$\varepsilon_\tau$ : constante diélectrique

$Q_T$ : facteur de mérite de l'antenne (pouvant être calculé) $w_{10}$ : fréquence de résonance,

tandis que l'impédance d'entrée $Z_{in}$ correspond à une valeur empirique ou expérimentale visant à optimiser l'adaptation d'impédance entre la diode détectrice/mélangeuse (6) et le conducteur résonnant/rayonnant (3) pendant la réception et l'émission/réflexion, en particulier de l'ordre de grandeur de l'impédance de la diode détectrice/mélangeuse (6), ou même identique à cette impédance.

7. Antenne selon une ou plusieurs des revendications 4 à 6, caractérisée en ce que la diode détectrice/mélangeuse (6) est connectée à la structure d'antenne rayonnante (1), du côté duquel se trouve la plaque conductrice de masse (4), une extension (7) étant formée sur ce côté pour connecter le conducteur résonnant/rayonnant (3) à la diode détectrice/mélangeuse (6), cette extension coïncidant avec la zone du point d'insertion (I) et étant électriquement isolée de la plaque de conducteur de masse (4), et cette extension de connexion (7) étant connectée électriquement au conducteur résonnant/rayonnant (3) se trouvant du côté opposé, au moyen d'une douille conductrice tubulaire (8) dont l'axe passe par le point d'insertion (I), et qui traverse la plaque diélectrique (2) d'un côté à l'autre.

8. Antenne selon une ou plusieurs des revendications précédentes, caractérisée en ce que, dans le cas d'ondes porteuses polarisées, la diode détectrice/mélangeuse (6) est orientée, en ce qui concerne l'axe (C) reliant les deux conducteurs de connexion (106), d'une manière prédéterminée par rapport aux côtés du conducteur résonnant/rayonnant (3), et en particulier dans le cas d'ondes polarisées de façon plane, cet axe (C) est orienté parallèlement au côté (203) du conducteur résonnant/rayonnant (3) qui s'étend transversalement à l'axe médian (M) passant par le point d'insertion (I), ce côté (203) étant orienté sous un angle de 90° par rapport au plan de polarisation du champ électrique de l'onde porteuse.

9. Antenne selon une ou plusieurs des revendications précédentes, caractérisée en ce que la diode détectrice/mélangeuse (6) constitue un démodulateur, de préférence pour des ondes porteuses modulées en amplitude qui sont reçues, et un modulateur de fréquence des ondes porteuses émises/réfléchies, de préférence un mélangeur de l'onde porteuse émise/réfléchie avec un signal de fréquence moyenne modulé en fréquence.

10. Antenne selon une ou plusieurs des revendications précédentes, caractérisée en ce que dans la gamme des micro-ondes, en particulier de l'ordre de grandeur de 1 à 20 GHz, de préférence de 5 à 10 GHz, la distance (D) du point d'insertion (I) est déterminée en correspondance avec une impédance d'entrée $Z_{in}$ adaptée du conducteur résonnant/rayonnant (3) au point d'insertion (I) de 10 à 100 ohms, en particulier de 40 à 50 ohms.

11. Antenne selon la revendication 10, caractérisée en ce que, pour une onde porteuse à 5,76 GHz, les dimensions du conducteur résonnant/rayonnant (3) sont de l'ordre de 10 millimètres, ou d'une valeur voisine, pour les côtés (203) orientés transversalement par rapport à l'axe médian (M) et pour les côtés (103) parallèles à l'axe médian (M), tandis que la distance (D) du point d'insertion (I) par rapport à l'un de ces côtés transversaux est de l'ordre de quelques millimètres.

Fig.1

Fig.2

Fig.3

11